# EUROPEAN PATENT SPECIFICATION

(11) **EP 2 779 731 B1**
(45) Date of publication and mention of the grant of the patent: **21.10.2015**
(21) Application number: 13305295.1
(22) Date of filing: 15.03.2013
(51) Int. Cl.: H04W 24/02, H04W 52/24

(54) **Network Control**
Netzwerksteuerung
Commande de réseau

(43) Date of publication of application: 17.09.2014
(73) Proprietor: ALCATEL LUCENT, 92100 Boulogne-Billancourt (FR)
(72) Inventor: Kucera, Stepan, Dublin, 15 (IE)
(74) Representative: Berthier, Karine

(56) References cited:
- WO-A1-2009/083035
- WO-A1-2010/003509
- US-A1- 2010 298 022
- US-A1- 2011 151 881

## Description

### FIELD OF THE INVENTION

The present invention relates to a method of controlling operation of a wireless communication network comprising a plurality of base stations, a computer program product and network control node operable to perform that method.

### BACKGROUND

Wireless communications systems are known. In such systems mobile communication devices, or "network connectible devices", are operable to communicate with each other via a core network.

Network connectible devices for example, mobile telephones, or wireless devices such as iPads or other similar tablets, roam through a wireless communication system. Base stations are typically provided which support geographical areas of radio coverage known as cells. A number of such base stations are provided and are distributed geographically in order to provide a wide area of radio coverage to network connectible devices.

When network connectible devices (for example, user equipment) are within an area of radio coverage provided by a base station, active communication links may be established between user equipment and the base station. Information and data sent from a base station to user equipment occur using radio links referred to as "down links" and information and data sent from user equipment to a base station occur using radio links referred to as "up links".

Traditional base stations provide coverage in relatively large geographical areas and large radio cells supported by such base stations are often referred to as macro cells. It is possible to provide a heterogeneous network (HetNet), where smaller sized cells are provided within macro cells. Provision of small cells can enhance network effectiveness and network capacity, primarily as a result of a shorter distance between a base station and a network connectible device leading to a shorter radio link length, and also due to provision of small cells allowing for effective re-use of available radio spectrum.

Such smaller sized cells are typically supported by base stations referred to as Low Power Nodes (LPNs) or small cell base stations and provide smaller regions of radio coverage known as micro cells, pico cells, femto cells or metro cells within a macro cell. It will be appreciated that small cells may be provided particularly where communication coverage provided by a macro cell is poor, or in locations in which a user may wish to use an alternative communications link provided locally by a small cell base station to communicate with the core network.

Although the deployment of small cell base stations can provide advantages, some undesirable operational consequences may occur.

Accordingly, it is desired to provide an improved technique for the operation of wireless communication networks, including networks in which small cell base stations may be deployed.

US2010/298022 discloses a system of varying the transmission power of a base station based on whether its radio coverage is less than its target coverage.

WO 2009/083035 discloses a method of upgrading a network by capturing network events, obtaining network simulation data and combining the two to derive diagnostic indicators indicating critical events and modifying the network configuration to avoid these events.

### SUMMARY

A first aspect provides a method of controlling operation of a wireless communication network comprising a plurality of base stations, each operable to support a region of radio coverage to allow communication links to be established with user equipment within said network, said method comprising: collecting operational information relating to user equipment operating in said network from said plurality of base stations, said operational information comprising one or more of: an indication of target signal to noise and interference ratio used by said base station serving said user equipment; an indication of user equipment channel gain; a sum of channel gain ratios; or an indication of interference caused to said user equipment by other user equipment in said network; determining, based on said collected operational information, an indication of said network capacity utilisation; calculating whether an operational parameter of one or more of said plurality of base stations may be adjusted to offer improved uplink service to said user equipment whilst substantially maintaining said determined indication of said network capacity utilisation, and, if so, instructing said adjustment of said operational parameter of one or more of said plurality of base stations; wherein said operational parameter of said one or more of said plurality of base stations comprises an indication of target signal to noise and interference ratio used by said base station serving said user equipment.

The first aspect recognises that available radio spectrum for use in wireless networks may be limited and methods of operation for network components are chosen to allow coordinated dynamic access of multiple active transceivers to shared radio frequency communication channels. Typically networks may be operable to balance a number of users within a network between base stations. Simply balancing user numbers between base stations may have advantages and, on the face of it, may appear to ensure that users are all offered an equally effective service.

The first aspect recognises that downlink-centric and uplink-centric algorithms to optimise network operation may result in conflicting strategies. This stems from fundamental downlink/uplink differences in implementation. Downlink transmissions made by macro base stations are typically characterized by a constant transmit power and an unknown distribution of downlink SINRs across a network, and uplink transmissions made by user equipment use iterative power adjustments to maintain predetermined constant SINR constraints set by base stations providing radio coverage. More specifically, downlink-oriented coverage algorithms primarily prioritize a load-balancing approach in which cell coverage is maintained such that the number of active cell users remains more or less equal among network cells. In contrast, optimisation of communication based on techniques which maximise uplink capacity do not operate to simply balance users across base stations. The first aspect recognises that it is possible to control operation of a network by taking steps to improve uplink communication links within a network.

The first aspect recognises that reliability and quality of communication on radio connections established between nodes in a network is dependent upon many factors, including signal to interference and noise ratio (SINR) experienced at each receiver.

In relation to uplink transmissions made by user equipment to a base station, a base station may implement a target SINR to be achieved by user equipment operating within its region of radio coverage. If it is determined that a transmission made by user equipment to the base station is being received at the base station with poor SINR, the user equipment operates to takes steps to increase the power at which it makes such uplink transmissions. That is to say, user equipment is typically operable to slowly increase (or decrease) transmission power as it updates its output power with respect to co-channel interference and noise experienced at a receiver; in this case, a base station.

Iterative power control in such a manner works well to deal with the free movement of users through a network, but may operate to cause global divergence by operating to try and allow a user to reach a SINR which is unobtainable, given available transmission power or ambient interference occurring within a network.

The first aspect offers a method of controlling operation of a network by optimising uplink communications made within the network. The first aspect recognises that typically full uplink capacity of cells, for example, in both macrocells and smallcells in a network, is not utilised. That underutilisation emerges in practical networks as a result of suboptimal uplink operation caused by: traffic-invariant macro cell coverage according to which typically 10 % of a base station power budget is statically pre-allocated to transmission of a pilot signal, emphasis on optimisation of downlink communication in small cell coverage adaptation although the uplink to downlink traffic ratio typically ranges from 1:2 to 1:10 with 1:4-5 being the mean, and a long-term "on-average" approach to uplink-oriented small cell coverage adaptation. Aspects and embodiments described herein propose use of "water-filling" methods to vary target operational parameters of nodes, for example user equipment and and/or base stations within a network, with the aim of opportunistically filling any uplink capacity gaps.

It will be appreciated that uncontrolled implementation changes to some operational parameters, for example, of target SINR increments, may lead to network-wide transmission outages as a result of limitations on the dynamic range of user terminal amplifiers. Linear increments of, for example, target SINRs may result in a near-exponential growth of minimum powers required for the allocation of such target SINRs with the SINR magnitude. At the limit of target SINR achievability, the required powers are theoretically infinite. Aspects and embodiments may avoid this problem by providing a tailored control mechanism. According to the first aspect, the control mechanism is that of substantially maintaining overall network capacity utilisation. That is to say, the first aspect aims to calculate whether it is possible to adjust parameters to improve uplink performance of users within a network without utilising substantially more network resource. It will be appreciated that strict maintenance of a determined indication of network capacity might render adjustments inapplicable, if for example, a minimum increment of adjustment is required, or not technically viable, for example, there may be no consequential data rate enhancement despite an adjustment as a result of the discrete nature of modulation schemes. In such circumstances, maintaining a determined indication of network capacity utilisation may be acceptable within a degree of tolerance, say L +x, where x is a small predefined increment x of L allowable as a result of an operational parameter of one or more of said plurality of base stations, given the likely achievable data rate enhancement associated with such adjustment.

In one embodiment, improved uplink service comprises improved average quality of service available to user equipment operating in the network. It will be appreciated that uplink service may be "improved" in a range of ways. That is to say, provision of uplink resource to more users may be considered to be such an improvement. The first aspect aims to improve the quality of service which can be offered to users operating within a particular network deployment. Reliability and quality of communication on radio connections established between nodes in a network is dependent upon many factors, including signal to interference and noise ratio (SINR) experienced at each receiver within a network. In relation to uplink transmissions made by user equipment to a base station, a base station may implement a target SINR to be achieved by user equipment operating within its region of radio coverage. If a high signal to noise ratio may be achieved, user equipment may be operable to transmit data more successfully and a higher quality of service overall may be achieved.

Operational information relating to user equipment operating in the network comprises one or more of: an indication of target signal to noise and interference ratio set by the base station serving the user equipment; an indication of user equipment channel gain; or an indication of interference caused to user equipment by other user equipment in the network. Accordingly, various operational factors may be taken into account when modelling a network. In order to optimise uplink capacity utilisation, operational information relating to uplink transmissions, such as channel gain and target signal to noise and interference ratio, together with an indication of the influence of other users operating within a network, may be taken into account.

The operational parameter of one or more of the plurality of base stations comprises: an indication of target signal to noise and interference ratio set by the base station serving each user equipment. Accordingly, although various operational parameters of a user equipment - base station relationship may be adjusted, user equipment operation in the uplink may be influenced significantly by a target signal to noise and interference ratio set by its serving base station. It is that target SINR which operates to control the power of an uplink transmission made by user equipment.

In one embodiment, adjustment of the operational parameter comprises adjustment by an increment of pre selected size. Accordingly, rather than try to implement significant changes or adjustments across base stations operating within a network, calculations may be performed based on a small tweak of an operational parameter. The increment may be based on, for example, in some network operation scenarios, permissible increments of target uplink SINRs may be limited to pre-determined discrete selected values. For example, a minimum increment of a target uplink SINR may be required to support a higher-order modulation scheme whilst maintaining the same transmission bit error rate.

In one embodiment, the collected operational information relating to user equipment operating in the network comprises real time ambient operational information. In one embodiment, the collected operational information relating to user equipment operating in the network comprises an indication of predicted operational information. Accordingly, in some embodiments, dynamic real-time coverage optimization is implemented and the cooperating base stations report the channel gain and target SINR data concerning only those UEs currently active within the network. Alternative embodiments may be such that it is desired to implement coverage optimization which reflects a long-term "on-average" trend, and in such alternative embodiments, cooperating base stations may be operable to report data from active UEs, together with data obtained in relation to "virtual" users. Such data may, for example, comprise data relating to previously active UEs, or data obtained from the (weighted) combining of data relating to previous users with that of current active users. In some embodiments, a total number of active and virtual users can be chosen to reflect a long-term traffic average in a current operation cycle of a network.

In one embodiment, the method comprises: calculating whether an operational parameter of one or more of the plurality of base stations may be adjusted to offer improved uplink service to the user equipment whilst maintaining the determined indication of the network capacity utilisation, the adjusting being calculated for those user equipment determined to be likely to be operating in cell edge regions of the network. User data can be selected for data reporting in some embodiments by ordering a parameter: **h_{BS(i),j}/h_{BS(i),i}** or **h_{BS(i),i}.** That parameter reflects whether users are likely to be operating at a cell edge. Prioritisation of cell edge users when implementing methods according to aspects described herein recognises that cell-edge users are likely to contribute most to inter-cell coupling that may effectively limit network capacity. By taking into account edge users by prioritising in this manner, robustness against user equipment mobility and traffic peaks may be taken into account.

In one embodiment, the method comprises: calculating whether an operational parameter of one or more of the plurality of base stations may be adjusted to offer improved uplink service to the user equipment whilst maintaining the determined indication of the network capacity utilisation, the adjusting being calculated for those user equipment determined to meet adjustment criteria related to one or more of: traffic demand; priority; data queue length or overall connection quality. Accordingly, adjustment to a target SNIR may be performed on a user by user basis, those users who could benefit most from adjustment being primary candidates for the adjustment calculations.

In one embodiment, calculating whether the operational parameter of one or more of the plurality of base stations may be adjusted to offer improved uplink service to the user equipment whilst substantially maintaining the determined indication of the network capacity utilisation comprises adjusting one or more SINR target of one or more of the plurality of base stations such that: **SINR₁ (N₁-1)** = **SINR₂ (N₂-1)** where **SINR₁** and **SINR₂** are target Signal to Interference and Noise ratio (SINR) at a first and second of the plurality of base stations, and **N₁** and **N₂** represent a number of active user equipment in a region of radio coverage supported by the first and second base station of the plurality of base stations. Accordingly, rather than balance load equally between base stations, the target quality of received transmissions made by user equipment can be taken into account. In one embodiment, the number of user equipment in a macrocell is artificially increased by an offset constant x when determining the macro cell load factor **SINR_{cell} (N_{cell} - 1)**, that offset constant x reflecting the asymmetry of inter-cell interference coupling. In other words, load factors can be defined as **SINR_{cell}** (**N _{cell} + x_{cell type} -** 1) for a cell-specific constant **x_{cell type}**. In one embodiment, the constant may be selected to be smaller than a maximum **SINR_{cell}** across those SINR targets used by said plurality of base stations.

In one embodiment, the indication of network capacity utilisation comprises **L** and is defined as the modulus of a dominant eigenvalue of a network information matrix **F**, an element in the **i**-th row and **j**-th column of an **NxN** matrix **F** being defined by **sinrᵢ h_{BS(i),j}** / **h_{BS(i})_{,i}** if **i** * **j**, and **0** if **i**=**j**, where
- **i**: index for distinguishing users in the network;
- **BS(i)**: serving base station of user **i**;
- **N**: total number of users in said network;
- **sinr**ᵢ: target signal to noise and interference ratio (SINR) of user **i**;
- **h**_{BS(i),j}: channel gain between user **j** and the serving base station of user **i**;
- **h**_{BS(i),i}: channel gain between user **i** and its serving base station.

Accordingly, in one implementation, within a group of cooperating base stations, one base station (for example, the macro cell base station), is dedicated to determining target uplink SINR updates which maintain a spectral radius **L** of a matrix **F** derived from networking deployment conditions. The dedicated base station is operable to collect channel gain and target SINR data information required to determine matrix **F**. Such collection of data can be performed periodically. In some embodiments, the dedicated base station is operable to use absolute channel gains **h_{BS(i),j}**, reported by user equipment in a network. In other embodiments, the dedicated base station may be operable to use normalized channel gains **h**_{BS(i),j} / **h**_{BS(i)},_{I} when forming the matrix **F**. Since a channel gain can be computed as a ratio of received and transmitted power, the cooperating base stations may be operable to report (i) pilot signal (CPICH) powers, and (ii) UE measurements of pilot signal strengths of individual base stations to the dedicated base station. According to come embodiments, if a user does not report on a pilot signal strength of a particular base station, the corresponding channel gain is considered to be zero (-∞ dB).

Once the dedicated base station has derived **F**, it is operable to compute the spectral radius **L** of the matrix **F**, and then vary the value of target uplink SINR of selected user equipment within the network served by the cooperating base station. For such selected user equipment, the dedicated base station is operable to scale all elements in the row of the matrix **F** that corresponds to a selected UE by the corresponding SINR-scaling factor. The dedicated base station is operable to then determines a maximum target UL SINR in relation to the selected user equipment such that the spectral radius **L'** of the SINR-scaled matrix **F'** is substantially equal to the original value **L** of the SINR-unscaled matrix **F**.

Methods for the computation of a matrix spectral radius such as the power method are well known. User equipment selected for enhanced SINR tests when forming matrix **F'** may, in some embodiments, be selected based on, for example, their traffic demands, priority, data queue length, and overall connection quality, for example, bit error rate.

In some embodiments, each base station is operable to set the target SINR to the same value **SINR_{cell}** for all of its users. In such embodiments, the dedicated base station may be operable to compute **L** of **F** by computing the spectral radius of an equivalent matrix **G**. The usage of the **CxC** matrix **G** instead of the **NxN** matrix **F** is numerically significantly more efficient as C « N.

In cases where information reported to the dedicated base station is not sufficient or is too corrupt to allow the dedicated base station to construct either **F** or **G**, the dedicated BS may, in some embodiments be operable to assume that the modified spectral radius **L'** of the SINR-scaled matrix **F'** is equal to the original radius **L** of the matrix **F** if the maximum cell-load factor **max_{cell} SINR_{cell}** (**N_{cell}** - **1**) (or, generally, any other given cell load factor) among the individual cell-load factors **SINR_{cell}** (**N_{cell} - 1**) associated with the cooperating BSs remains constant. The term **SINR_{cell}** denotes the joint target uplink SINR of the user equipment in a given cell, and **N_{cell1}** denotes the number of active user equipment in the cell.

In one embodiment, maintaining the determined indication of network capacity utilisation comprises bounding a difference between a calculated indication of network capacity utilisation associated with an adjusted operational parameter and an originally calculated indication of network capacity utilisation. In some embodiments, in addition to maximizing uplink SINRs such that the pre-maximization spectral radius **L** remains equal to the post-maximization radius **L'**, the dedicated base station may be operable to implement maximization criterion based on: limiting the difference |**L**-**L**'| ; bounding **L'**; or achieving an exact **L'**. In some embodiments, in addition to a constraint on maintaining a largely invariant value of **L**, selection of maximum uplink target SINRs may be subject to multiple further constraints in relation to: *achievability, of the target UL SINRs* (maintaining post-scaling L'< 1 for a (sub)matrix F* of F', corresponding to the currently active UEs); *mitigated cell-breathing* (maximum UE power **p = -(A-E)⁻¹B** is limited where **E** is a diagonal identity matrix, and the **i-th** element of the vector **B** is **(Oᵢ** + **SINRᵢ nᵢ) / hᵢᵢ.** The term **Oᵢ** denotes a positive constant (e.g., an "open-loop" power offset) and **nᵢ** denotes the AWG noise), and *robustness under UE mobility* (limited increase of **L** in response to an increase of selected elements of **F**).

It will be appreciated that the structure of the matrix, or equivalent matrix is such that by maintaining L<1, the method described may be operable to ensure that the target SINRs of all network users are at all times achievable via simple closed-loop power control.

In one embodiment, the method comprises calculating whether an operational parameter of one or more of the plurality of base stations may be adjusted to offer improved uplink service to the user equipment whilst maintaining the determined indication of network capacity utilisation, the adjustment comprising an adjustment to which of the plurality of base station is the serving base station of the user equipment, and, if so, instructing the adjustment of the operational parameter of one or more of the plurality of base stations. It will be appreciated that the matrix model of a network identifies two primary degrees of freedom in relation to means of altering performance of a network: changing SINR targets set for users by base stations and changing channel gain and interference experienced by users. A change to channel gain may be implemented by changing the serving base station of a user. Changing a serving cell of a user may be done explicitly by command messaging, by adjusting the transmission power of a base station to effectively increase the coverage area of such a base station to encompass users which otherwise would be served by a different base station, or by increasing a bias to be applied in relation to a base station pilot by users within the network.

In some embodiments, **L** may be optimised by adjusting serving cells of users within a network. Once **L** has been minimised, calcualtions may be performed to adjust SINR targets to optimise uplink performance of users within a network whilst using minimising used network capacity.

In one embodiment, the communication network comprises: a macro base station supporting a macro region of radio coverage and at least one small cell base station operable to support a region of small cell radio coverage within the macro region of radio coverage. One reason to deploy small cells in a network is that of providing an effective "on-demand" capacity boost in traffic hotspots. Aspects and embodiments may offer a means to utilise the theoretically available uplink capacity of the small cells (in other words, the UL quality of service) by means of: (i) adaptively varying the target UL SINRs in a controlled manner whilst (ii) preserving largely invariant the related energetic expenditures. Small cell deployments may show a rather low capability in relation to an ability to offload significant traffic from a macrocell base station, mainly due to large differences in power budget and antenna directivity. Aspects and embodiments may operate such that small cells can offer up to 15-20 dB higher target SINRs at the small cell side.

A second aspect provides a computer program product operable, when executed on a computer, to perform the method of the first aspect.

A third aspect provides a network control node configured to control operation of a wireless communication network comprising a plurality of base stations, each operable to support a region of radio coverage to allow communication links to be established with user equipment (UE₁, UE₂ within said network, said network control node comprising: collection logic operable to collect operational information relating to user equipment operating in said network from said plurality of base stations, said operational information comprising one or more of: an indication of target signal to noise and interference ratio used by said base station serving said user equipment; an indication of user equipment channel gain; a sum of channel gain ratios; or an indication of interference caused to said user equipment by other user equipment in said network; determination logic operable to determine, based on said collected operational information, an indication of said network capacity utilisation; calculation logic operable to calculate whether an operational parameter of one or more of said plurality of base stations may be adjusted to offer improved uplink service to said user equipment whilst substantially maintaining said determined indication of said network capacity utilisation, and, implementation logic operable to instruct said adjustment of said operational parameter of one or more of said plurality of base stations if said calculation logic determines that an operational parameter of one or more of said plurality of base stations may be adjusted to offer improved uplink service to said user equipment whilst substantially maintaining said determined indication of said network capacity utilisation; wherein said operational parameter of said one or more of said plurality of base stations comprises an indication of target signal to noise and interference ratio used by said base station serving said user equipment.

In one embodiment, improved uplink service comprises improved average quality of service available to user equipment operating in the network.

In one embodiment, adjustment of the operational parameter comprises adjustment by an increment of pre selected size.

In one embodiment, the collected operational information relating to user equipment operating in the network comprises real time ambient operational information.

In one embodiment, the collected operational information relating to user equipment operating in the network comprises an indication of predicted operational information.

In one embodiment, the calculation logic is operable to calculate whether an operational parameter of one or more of the plurality of base stations maybe adjusted to offer improved uplink service to the user equipment whilst maintaining the determined indication of the network capacity utilisation, the adjusting being calculated for those user equipment determined to be likely to be operating in cell edge regions of the network.

In one embodiment, the calculation logic is operable to calculate whether an operational parameter of one or more of the plurality of base stations may be adjusted to offer improved uplink service to the user equipment whilst maintaining the determined indication of the network capacity utilisation, the adjusting being calculated for those user equipment determined to meet adjustment criteria related to one or more of: traffic demand; priority; data queue length or overall connection quality.

In one embodiment, the calculation logic is operable to calculate whether said operational parameter of one or more of the plurality of base stations may be adjusted to offer improved uplink service to the user equipment whilst substantially maintaining the determined indication of said network capacity utilisation comprises adjusting one or more SINR target of one or more of the plurality of base stations such that: **SINR₁ (N₁ -1)** = **SINR₂ (N₂ -1)** where **SINR₁** and **SINR₂** are target Signal to Interference and Noise ratio (SINR) at a first and second of the plurality of base stations, and **N₁** and **N₂** represent a number of active user equipment in a region of radio coverage supported by the first and second base station of the plurality of base stations.

In one embodiment, the indication of network capacity utilisation comprises **L** and is defined as the modulus of a dominant eigenvalue of a network information matrix **F**, an element in the **i**-th row and **j**-th column of an **NxN** matrix **F** being defined by **sinrᵢ h_{BS(i),j}** / **h_{BS(i),i}** if **i** ≠ **j**, and **0** if **i**=**j**, where
- **i**: index for distinguishing users in the network;
- **BS(i)**: serving base station of user **i**;
- **N**: total number of users in said network;
- **sinrᵢ**: target signal to noise and interference ratio (SINR) of user **i**;
- **h**_{**BS(i)**,**j**}: channel gain between user **j** and the serving base station of user **i**;
- **h_{BS(i),i}**: channel gain between user **i** and its serving base station.

In one embodiment, the implementation logic is operable to maintain the determined indication of network capacity utilisation by bounding a difference between a calculated indication of network capacity utilisation associated with an adjusted operational parameter and an originally calculated indication of network capacity utilisation.

In one embodiment, the calculation logic is operable to calculate whether an operational parameter of one or more of the plurality of base stations may be adjusted to offer improved uplink service to the user equipment whilst maintaining the determined indication of network capacity utilisation, the adjustment comprising an adjustment to which of the plurality of base station is the serving base station of the user equipment, and, if so, instructing the adjustment of the operational parameter of one or more of the plurality of base stations to adjust the user equipment that are served by one or more of the plurality of base stations.

In one embodiment, the communication network comprises: a macro base station supporting a macro region of radio coverage and at least one small cell base station operable to support a region of small cell radio coverage within the macro region of radio coverage.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

### BRIEF DESCRIPTION OF THE DRAWINGS

Embodiments of the present invention will now be described further, with reference to the accompanying drawings, in which:
Figure 1 illustrates schematically main steps of a method in accordance with one embodiment;
Figure 2 illustrates schematically creation of a network model matrix according to one embodiment;
Figure 3 illustrates asymmetry between uplink and downlink traffic according to a simulated cellular network; and
Figure 4 shows a distribution of pilot signal strength in a simulated cellular network used to illustrate asymmetry between uplink and downlink in Figure 3.

### DESCRIPTION OF THE EMBODIMENTS

Components of a wireless telecommunications network typically include network connectible devices, including user equipment which are operable to roam through the wireless telecommunications network. Base stations (for example, node Bs and eNode Bs) are provided which each support an area of radio coverage. A number of such base stations are typically provided and are distributed geographically in order to provide a wide area of coverage to network connectible devices such as user equipment.

When users are within an area of radio coverage served and supported by a base station, communications may be established between the user equipment and the base station over associated radio links. Communications which are sent from a base station to users are typically referred to as occurring on downlink channels, and communications transmitted by user equipment to base stations on associated radio channels are referred to as uplink channels. Each base station typically supports a number of sectors or cells within a geographical area of service. Typically, a different antenna within a base station supports each associated sector. Each base station has multiple antennas. It will be appreciated that different network architectures may be implemented to provide a wireless telecommunications network, including, for example, UMTS systems, WiMAX systems and Long Term Evolution (LTE) systems. In general, across these architectures, the functionality provided by network nodes described above is provided by network nodes which are named differently but have substantially analogous functionality.

Wireless communications systems are known. In such systems mobile communication devices, or "network connectible devices", are operable to communicate with each other via a core network.

Available radio spectrum for use in wireless networks may be limited and methods of operation for network components are typically chosen to allow coordinated dynamic access of multiple active transceivers to shared radio frequency communication channels. Networks may be operable to balance a number of users within a network between base stations. Simply balancing user numbers between base stations may have advantages and, on the face of it, may appear to ensure that users are all offered an equally effective service.

Aspects described herein recognise that downlink-centric and uplink-centric algorithms to optimise network operation may result in conflicting strategies. This stems from fundamental downlink/uplink differences in implementation. Downlink transmissions made by macro base stations are typically characterized by a constant transmit power and an unknown distribution of downlink SINRs across a network, and uplink transmissions made by user equipment use iterative power adjustments to maintain predetermined constant SINR constraints set by base stations providing radio coverage.

Reliability and quality of communication on radio connections established between nodes in a network is dependent upon many factors, including signal to interference and noise ratio (SINR) experienced at each receiver within a network. In relation to uplink transmissions made by user equipment to a base station, a base station may implement a target SINR to be achieved by user equipment operating within its region of radio coverage. If it is determined that a transmission made by user equipment to the base station is being received at the base station with poor SINR, the user equipment operates to takes steps to increase the power at which it makes such uplink transmissions. That is to say, user equipment is typically operable to slowly increase (or decrease) transmission power as it updates its output power with respect to co-channel interference and noise experienced at a receiver; in this case, a base station.

Iterative power control in such a manner works well to deal with the free movement of users through a network, but may operate to cause global divergence by operating to try and allow a user to reach a SINR which is unobtainable, given available transmission power or ambient interference occurring within a network.

### Overview

Before discussing the embodiments in any more detail, first an overview will be provided.

As set out above, downlink-oriented coverage algorithms primarily prioritize a load-balancing approach in which the cell coverage is maintained such that the number of active cell users remains more or less equal among network cells.

In contrast, a coverage-optimization algorithm maximizing *uplink* capacity under hard SINR constraints minimises spectral radius of a network information matrix. This criterion, roughly speaking, corresponds to maintaining the cell user numbers in ratios that are a non-linear (i.e., non-constant) function of cell target SINRs.

Typically full uplink capacity of cells, for example, in both macrocells and smallcells, is not utilised. That underutilisation emerges in practical networks as a result of suboptimal uplink operation caused by: traffic-invariant macro cell coverage according to which typically 10 % of a base station power budget is statically pre-allocated to transmission of a pilot signal, emphasis on optimisation of downlink communication in small cell coverage adaptation although the uplink to downlink traffic ratio typically ranges from 1:2 to 1:10 with 1:4-5 being the mean, and a long-term "on-average" approach to uplink-oriented small cell coverage adaptation.

Aspects and embodiments described herein propose use of "water-filling" methods to vary target SINRs within a network, with the aim of opportunistically filling any uplink capacity gaps.

It will be appreciated that uncontrolled implementation of target SINR increments may lead to network-wide transmission outages as a result of limitations on the dynamic range of user terminal amplifiers. Linear increments of target SINRs may result in a near-exponential growth of minimum powers required for the allocation of such target SINRs with the SINR magnitude. At the limit of target SINR achievability, the required powers are theoretically infinite. Aspects and embodiments may avoid this problem by tailoring control mechanisms for energy-efficient enhancement of target SINRs.

Aspects and embodiments described may operate to maximise overall uplink capacity of a network by opportunistically increasing uplink (UL) target SINRs of cells in a network, including, for example, both macro cells and small cells, such that a spectral radius of a network information matrix (defined below) remains substantially constant or largely invariant. Aspects and embodiments recognise that maintaining the spectral radius constraint results in virtually no increase of transmit powers required for the allocation of the target SINRs by iterative power control. Moreover, if the spectral radius is exceeded only modestly, the increase in transmit powers is very low, especially if the spectral radius is much smaller than one.

A practical distributed version of aspects and embodiments operates to opportunistically increase target uplink SINRs in one or more network cells to balance their so-called effective cell loads (defined below) whilst maintaining as a constant a maximum effective cell load in the considered set of network cells.

The following examples of aspects and embodiments are described in relation to standard cellular wireless CDMA networks in which uplink transmitters are operable to enforce, via iterative power control, a pre-defined target SINR set by a receiver, in these examples, a base station. It will be appreciated that maintenance of hard SINR constraints via iterative power control is also readily implemented in other networks, for example, ones based on the LTE system.

Throughout the following examples, the following notation is used:
- **BS**: base station
- **C**: total number of cooperating BSs
- **c, d**: index for distinguishing cooperating BSs (**1≤c≤C**, **1≤d≤C**)
- **UE**: user
- **UE(d)**: set of UEs served by the BS **d**
- **N**: total number of UEs in the cells served by the **C** cooperating BSs
- **i**: index for distinguishing UEs in the cells of the cooperating BSs
- **BS(i)**: serving **BS** of UE **i**
- **sinrᵢ**: target SINR of UE **i**
- **N_{c}**: total number of UEs served by the BS **c** (cardinality of **UE**(**c**))
- **h_{BS(i),j}**: channel gain between the UE **j** and the BS of UE **i**
- **h_{BS(i),i}**: channel gain between the UE **i** and its serving BS
- **F**: **NxN** matrix whose element in the **i**-th row and **j**-th column is **sinrᵢ h_{BS(i),j}** / **h_{BS(i),i}** if **i** ≠ **j**, and **0** if **i** = **j**
- **G**: **CxC** matrix whose element in the **c**-th row and **d**-th column is **sinr_{c} ∑**_{i€UE(**d**)} **h_{c,i}**/**h_{d,i}** if **c≠d**, and **sinr_{c}** (**N_{c}** - **1**) if **c** = **d** for **sinr_{c}** denoting the joint target SINR of all UEs served by the BS **c.**

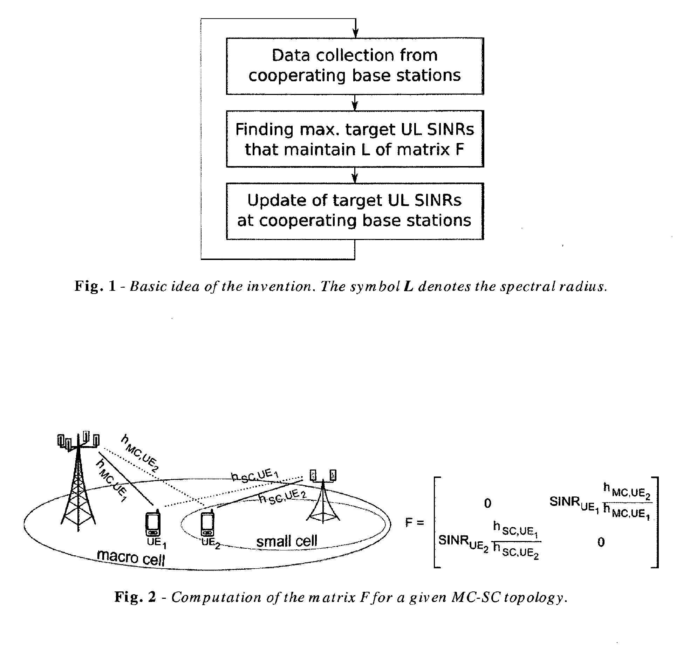

Figure 1 illustrates schematically main steps of a method in accordance with one embodiment. Those main steps comprise collecting data from cooperating data, using that data to create a network model matrix, the structure of which is based upon a model of uplink transmissions within a network, determining whether adjustment to target Signal to Interference and Noise Ratio(s) (SINRs) being implemented by base stations within the network may be increased or otherwise changes across the network whilst maintaining a current energy usage and, if so, instructing an adjustment to uplink target SINRs as appropriate. Detailed descriptions of the main steps of a method such as that shown in Figure 1 are set out below.

### Data collection

Throughout the described examples, a network comprising a macro cell and a plurality of small cells is considered. It will be appreciated that aspects and embodiments may also be implemented in a network comprising only macro cells, or only small cells. In any case, in the examples described herein a hosting macrocell cooperates with small cells deployed within its area of radio coverage, and aspects and embodiments are implemented in order to reliably control target SINRs set by each base station for users operating within their coverage region, those target SINRs being within acceptable bounds.

In one implementation, within a group of cooperating base stations, one base station, for example, the macro cell base station, is dedicated to determining target uplink SINR updates which maintain a spectral radius **L** of a matrix **F** derived from current networking deployment conditions.

The dedicated base station is operable to collect channel gain and target SINR data information required to determine matrix **F**. Such collection of data can be performed periodically. In some embodiments, the dedicated base station is operable to use absolute channel gains **h_{BS(i),j}**, reported by user equipment in a network. In other embodiments, the dedicated base station may be operable to use normalized channel gains **h_{BS(i),j} / h_{BS(i),I}** when forming the matrix **F**. Since a channel gain can be computed as a ratio of received and transmitted power, the cooperating base stations may be operable to report (i) pilot signal (CPICH) powers, and (ii) UE measurements of pilot signal strengths of individual base stations to the dedicated base station. According to come embodiments, if a user does not report on a pilot signal strength of a particular base station, the corresponding channel gain is considered to be zero (-∞ dB).

In some embodiments, dynamic real-time coverage optimization is implemented and the cooperating base stations report the channel gain and target SINR data concerning only those UEs currently active within the network. Alternative embodiments may be such that it is desired to implement coverage optimization which reflects a long-term "on-average" trend, and in such alternative embodiments, cooperating base stations may be operable to report data from active UEs, together with data obtained in relation to "virtual" users. Such data may, for example, comprise data relating to previously active UEs, or data obtained from the (weighted) combining of data relating to previous users with that of current active users. In some embodiments, a total number of active and virtual users can be chosen to reflect a long-term traffic average in a current operation cycle of a network.

User data can be selected for data reporting in some embodiments by ordering a parameter: **h**_{**B**S(i),j}/**h**_{**B**S(i),i} or **h**_{**B**S(i),i}. That parameter reflects whether users are likely to be operating at a cell edge. Prioritisation of cell edge users when implementing methods according to aspects described herein recognises that cell-edge users are likely to contribute most to inter-cell coupling that may effectively limit network capacity. By taking into account edge users by prioritising in this manner, robustness against user equipment mobility and traffic peaks may be taken into account.

### Maximization of UL SINRs

Once user data has been collected, the dedicated base station is operable to determine corresponding matrix **F**.

Figure 2 illustrates schematically calculation of a matrix **F** according to one embodiment. As can be seen in Figure 2, the matrix **F** is derived in accordance with its definition for the given illustrated macro cell-small cell topology, in this case, A macro cell and a single small cell and two users, UE1 and UE2.

Once the dedicated base station has derived **F**, it is operable to compute the spectral radius **L** of the matrix **F**, and then vary the value of target uplink SINR of selected user equipment within the network served by the cooperating base station. For such selected user equipment, the dedicated base station is operable to scale all elements in the row of the matrix **F** that corresponds to a selected UE by the corresponding SINR-scaling factor. The dedicated base station is operable to then determines a maximum target UL SINR in relation to the selected user equipment such that the spectral radius **L'** of the SINR-scaled matrix **F'** is substantially equal to the original value **L** of the SINR-unscaled matrix **F**.

Methods for the computation of a matrix spectral radius such as the power method are well known. User equipment selected for enhanced SINR tests when forming matrix **F'** may, in some embodiments, be selected based on, for example, their traffic demands, priority, data queue length, and overall connection quality, for example, bit error rate.

In some embodiments, each base station is operable to set the target SINR to the same value **SINR_{cell}** for all of its users. In such embodiments, the dedicated base station may be operable to compute **L** of **F** by computing the spectral radius of an equivalent matrix **G**. The usage of the **CxC** matrix **G** instead of the **NxN** matrix **F** is numerically significantly more efficient as C « N.

In cases where information reported to the dedicated base station is not sufficient or is too corrupt to allow the dedicated base station to construct either **F** or **G**, the dedicated BS may, in some embodiments be operable to assume that the modified spectral radius **L'** of the SINR-scaled matrix **F'** is equal to the original radius **L** of the matrix **F** if the maximum cell-load factor m **ax_{cell} SINR_{cell}** (**N_{cell}** - **1**) (or, generally, any other given cell load factor) among the individual cell-load factors **SINR**_{cell} (**N_{cell}** - **1**) associated with the cooperating BSs remains constant. The term **SINR_{cell}** denotes the joint target uplink SINR of the user equipment in a given cell, and **N_{cell}** denotes the number of active user equipment in the cell.

In one embodiment, the number of user equipment in a macrocell is artificially increased by an offset constant **x** when determining the macro cell load factor **SINR_{cell}** (**N_{cell}** - **1**), that offset constant x reflecting the asymmetry of inter-cell interference coupling. In other words, load factors can be defined as **SINR_{cell}** (**N_{cell}** + **x_{cell type}** - **1**) for a cell-specific constant **x_{cell type}.**

In some embodiments, in addition to maximizing uplink SINRs such that the pre-maximization spectral radius **L** remains equal to the post-maximization radius **L'**, the dedicated base station may be operable to implement maximization criterion based on: limiting the difference |**L-L'**| ; bounding **L**'; or achieving an exact **L**'.

According to some embodiments, it is possible to further increment **L'** over **L**. That is to say, some embodiments may be operable to further enhance the target uplink SINRs set by a base station. Depending on the particular network topology, an increase of uplink TX power required for to meet updated target UL SINRs may be very slow and quasi-linear. This may particularly be the case if **L** is much smaller than 1, which typically represents a network with low/medium traffic, and/or a network displaying low inter-cell coupling.

In some embodiments, in addition to a constraint on maintaining a largely invariant value of **L**, selection of maximum uplink target SINRs may be subject to multiple further constraints in relation to: *achievability of the target UL SINRs* (maintaining post-scaling L'<1 for a (sub)matrix F* of F', corresponding to the currently active UEs); *mitigated cell-breathing* (maximum UE power **p = -(A-E)-¹B** is limited where **E** is a diagonal identity matrix, and the **i**-th element of the vector **B** is **(Oᵢ** + **SINRᵢ nᵢ)** / **hᵢᵢ**. The term **Oᵢ** denotes a positive constant (e.g., an "open-loop" power offset) and **nᵢ** denotes the AWG noise), and *robustness under UE mobility* (limited increase of **L** in response to an increase of selected elements of **F**).

### UL SINR updates

Once calculations have been made, the dedicated base station may be operable, according to some embodiments, to announce maximum possible increments of target uplink SINRs to the cooperating base stations. Those cooperating base stations may then be operable to perform the target SINR updates suggested or instructed by the dedicated base station.

In some embodiments, the cooperating base stations may be operable to perform additional scaling of maximum permissible SINR by a factor **L/Lₘₑₐₛ** where: **L** is the spectral radius of the matrix **F** in its pre-scaling form, and **Lₘₑₐₛ** is the spectral radius measured by using a real-time method. Such a measure may help to take into account common traffic asynchrony of network user equipment.

In some network operation scenarios, permissible increments of target uplink SINRs may be limited to pre-determined discrete selected values. For example, a minimum increment of a target uplink SINR may be required to support a higher-order modulation scheme whilst maintaining the same transmission bit error rate.

In some embodiments, in addition to making a report to cooperating base stations in relation to possible increments of target uplink SINRs, the dedicated BS may also announce required or suggested adjustments to the cell coverage of the cooperating base stations.

In particular, if the dedicated base station detects or determines using the above-mentioned procedure that: the target uplink SINR cannot be increased over a minimum required threshold under given networking conditions, represented by **F**, but an altered UE-cell association allows satisfying the SINR increment constraints thanks to the new form of the matrix **F** (by balancing effective cell loads), and such an altered UE-cell association is technically achievable by adjusting the pilot signal strength and cell-selection bias of the cooperating base stations, the dedicated base station may be operable to request that cooperating base stations adjust their coverage such that the preferred altered UE-cell association(s) are implemented.

In general, enhancing an UL SINR by more than a currently feasible amount implies a reduction of the coverage of the corresponding cell, and vice versa. Practically, coverage adaptations can be considered only if the SINR of cell-edge users is to be enhanced.

### Use with Small Cells and Low Power Nodes

One reason to deploy small cells in a network is that of providing an effective "on-demand" capacity boost in traffic hotspots. Aspects and embodiments may offer a means to utilise the theoretically available uplink capacity of the small cells (in other words, the UL quality of service) by means of: (i) adaptively varying the target UL SINRs in a controlled manner whilst (ii) preserving largely invariant the related energetic expenditures.

The feature of energetic efficiency is of interest due to the recent emphasis on "green" networking solutions. Technically, it plays a key role in the stability of uplink SINR variations, and may mitigate transmission outages by mitigating the undesirable coverage loss due to transmit power limitations, also known as the "cell-breathing phenomenon".

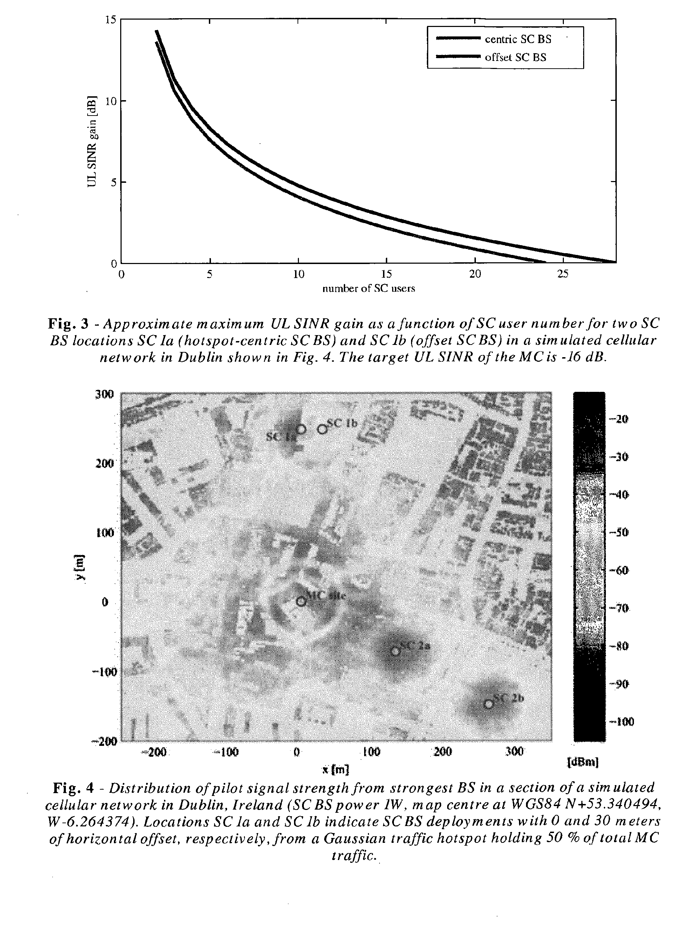

Figure 3 illustrates asymmetry between uplink and downlink traffic according to a simulated cellular network; and Figure 4 shows a distribution of pilot signal strength in a simulated cellular network used to illustrate asymmetry between uplink and downlink in Figure 3. The extent to which aspects and embodiments may be useful may depend upon actual asymmetry experienced in real-world networks between, for example, small cell and macro cell uplink traffic.

Small cell deployments may show a rather low capability in relation to an ability to offload significant traffic from a macrocell base station, mainly due to large differences in power budget and antenna directivity. Aspects and embodiments may operate such that small cells can offer up to 15-20 dB higher target SINRs at the small cell side.

Importantly, aspects and embodiments may be applicable even if no small cells are present in a network. In other words, methods described may be applicable to a standard homogeneous multi cell-only network. In all embodiments, by maintaining L<1, the method described may be operable to ensure that the target SINRs of all network users are at all times achievable via simple closed-loop power control. Aspects and embodiments described may allow for optimum enhancement of uplink quality-of-service within a network, may guarantee the achievability of the target UL SINRs from the point of view of both power control stability and power budget limitations, may allow for energetic efficiency, mitigation of the cell-breathing phenomenon, whilst offering an implementation which is both simple and robust.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/ or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its scope as defined by the claims. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions.

## Claims

1. A method of controlling operation of a wireless communication network comprising a plurality of base stations, each operable to support a region of radio coverage to allow communication links to be established with user equipment (UE₁, UE₂) within said network, said method comprising:
collecting operational information relating to user equipment operating in said network from said plurality of base stations, said operational information comprising one or more of: an indication of target signal to noise and interference ratio used by a base station serving said user equipment; an indication of user equipment channel gain; a sum of channel gain ratios; or an indication of interference caused to said user equipment by other user equipment in said network;
determining, based on said collected operational information, an indication of said network capacity utilisation;
calculating whether an operational parameter of one or more of said plurality of base stations may be adjusted to offer improved uplink service to said user equipment whilst maintaining said determined indication of said network capacity utilisation, and, if so,
instructing said adjustment of said operational parameter of one or more of said plurality of base stations; wherein
said operational parameter of said one or more of said plurality of base stations comprises an indication of target signal to noise and interference ratio used by said base station serving said user equipment.

2. A method according to claim 1, wherein improved uplink service comprises improved average quality of service available to said user equipment operating in said network.

3. A method according to any preceding claim, wherein said adjustment of said operational parameter comprises adjustment by a selected increment.

4. A method according to any preceding claim, wherein said collected operational information relating to user equipment operating in said network comprises current operational information.

5. A method according to any one of claims 1 to 3, wherein said collected operational information relating to user equipment operating in said network comprises an indication of predicted operational information.

6. A method according to any preceding claim, comprising calculating whether an operational parameter of one or more of said plurality of base stations may be adjusted to offer improved uplink service to said user equipment whilst maintaining said determined indication of said network capacity utilisation, said adjusting being calculated for those user equipment determined to meet adjustment criteria related to one or more of: traffic demand; priority; data queue length or overall connection quality.

7. A method according to any preceding claim, wherein calculating whether said operational parameter of one or more of said plurality of base stations may be adjusted to offer improved uplink service to said user equipment whilst maintaining said determined indication of said network capacity utilisation comprises adjusting one or more SINR target of one or more of said plurality of base stations such that: **SINR₁ (N₁ -1) = SINR₂ (N₂ -1)** where **SINR₁** and **SINR₂** are target Signal to Interference and Noise ratio (SINR) at a first and second of said plurality of base stations, and **N₁** and **N₂** represent a number of active user equipment in a region of radio coverage supported by said first and second base station of said plurality of base stations.

8. A method according to any preceding claim, wherein said indication of said network capacity utilisation comprises **L** which is defined as the modulus of the dominant eigenvalue of a network information matrix **F**, the element in the i-th row and j-th column of an **NxN** matrix **F** being defined by **sinrᵢ h_{BS(i),j}** / **h_{BS(i),i}** if **i** ≠ **j**, and **o** if **i=j**, where
**i** index for distinguishing users in said network;
**BS(i)** serving base station of user **i**;
**N** total number of users in said network;
**sinrᵢ** target signal to noise and interference ratio (SINR) of user **i**;
**h_{BS(i)j}** channel gain between user **j** and the serving base station of user **i**;
**h_{BS(i),i}** channel gain between user **i** and its serving base station.

9. A method according to any preceding claim, wherein maintaining said determined indication of said network capacity utilisation comprises bounding a difference between a calculated indication of said network capacity utilisation associated with an adjusted operational parameter and an originally calculated indication of said network capacity utilisation.

10. A method according to any preceding claim, wherein said method comprises calculating whether an operational parameter of one or more of said plurality of base stations may be adjusted to offer improved uplink service to said user equipment whilst maintaining said determined indication of said network capacity utilisation, said adjustment comprising an adjustment to which of said plurality of base station is the serving base station of said user equipment, and, if so,
instructing said adjustment of said operational parameter of one or more of said plurality of base stations.

11. A method according to any preceding claim, wherein said communication network comprises a macro base station supporting a macro region of radio coverage and at least one low power node operable to support a region of small cell radio coverage within said macro region of radio coverage.

12. A computer program product operable, when executed on a computer, to perform the method of any one of claims 1 to 11.

13. A network control node configured to control operation of a wireless communication network comprising a plurality of base stations, each operable to support a region of radio coverage to allow communication links to be established with user equipment (UE₁, UE₂)
within said network, said network control node comprising:
collection logic operable to collect operational information relating to user equipment operating in said network from said plurality of base stations, said operational information comprising one or more of: an indication of target signal to noise and
interference ratio used by said base station serving said user equipment; an indication of user equipment channel gain; a sum of channel gain ratios; or an indication of interference caused to said user equipment by other user equipment in said network;
determination logic operable to determine, based on said collected operational information, an indication of said network capacity utilisation;
calculation logic operable to calculate whether an operational parameter of one or more of said plurality of base stations may be adjusted to offer improved uplink service to said user equipment whilst substantially maintaining said determined indication of said network capacity utilisation, and,
implementation logic operable to instruct said adjustment of said operational parameter of one or more of said plurality of base stations if said calculation logic determines that an operational parameter of one or more of said plurality of base stations maybe adjusted to offer improved uplink service to said user equipment whilst maintaining said determined indication of said network capacity utilisation; wherein said operational parameter of said one or more of said plurality of base stations comprises an indication of target signal to noise and interference ratio used by said base station serving said user equipment.

## Patentansprüche

1. Verfahren zur Steuerung des Betriebs eines drahtlosen Kommunikationsnetzwerks, eine Vielzahl von Basisstationen umfassend, jede von ihnen betriebsfähig für das Unterstützen einer Funkabdeckungsregion, um das Herstellen von Kommunikationsverbindungen zu Benutzergeräten (UE₁, UE₂) innerhalb besagten Netzwerks zu ermöglichen, wobei das Verfahren umfasst:
Sammeln von Betriebsdaten zu dem in besagtem Netzwerk operierenden Benutzergerät von besagter Vielzahl von Basisstationen, wobei besagte Betriebsdaten eine oder
mehrere der folgenden Informationen umfassen: die Angabe eines Zielwerts für das Signal-zu-Rausch-und-Interferenz-Verhältnis, das von einer besagtes Benutzergerät bedienenden Basisstation verwendet wird; die Angabe einer Benutzergeräts-Kanalverstärkung; eine Summe von Kanalverstärkungsverhältnissen; oder die Angabe der Interferenz, die bei besagtem Benutzergerät durch andere Benutzergeräte in besagtem Netzwerk verursacht wird.
auf der Grundlage besagter gesammelter Betriebsdaten das Bestimmen einer Angabe besagter Netzwerkskapazitätsnutzung;
Berechnen, ob ein Betriebsparameter einer oder mehrerer aus besagter Vielzahl von Basisstationen angepasst werden kann, um besagtem Benutzergerät einen besseren Uplink-Service bieten zu können, dabei besagte bestimmte Angabe besagter Netzwerkskapazitätsnutzung beibehaltend, und falls ja,
Anweisen der Umsetzung besagter Anpassung besagter Betriebsparameter einer oder mehrerer aus besagter Vielzahl von Basisstationen; wobei
besagte Betriebsparameter besagter einer oder mehrerer aus besagter Vielzahl von Basisstationen die Angabe eines Zielwerts für das Signal-zu-Rausch-und-Interferenz-Verhältnis umfasst, zu verwenden durch besagte Basisstation, die besagtes Benutzergerät bedient.

2. Verfahren nach Anspruch 1, wobei der verbesserte Uplink-Service eine verbesserte durchschnittliche Servicequalität für besagtes in besagtem Netzwerk operierendes Benutzergerät umfasst.

3. Verfahren nach einem beliebigen der vorstehenden Ansprüche, wobei besagte Anpassung besagten Betriebsparameters die Anpassung um eine ausgewählte Erhöhung umfasst.

4. Verfahren nach einem beliebigen der vorstehenden Ansprüche, wobei besagte Betriebsdaten zu dem in besagtem Netzwerk operierenden Benutzergerät aktuelle Betriebsinformationen umfassen.

5. Verfahren nach einem beliebigen der Ansprüche 1 bis 3, wobei besagte gesammelte Betriebsdaten zu dem in besagtem Netzwerk operierenden Benutzergerät eine Angabe zu vorhergesagten Betriebsdaten enthalten.

6. Verfahren nach einem beliebigen der vorstehenden Ansprüche, das Berechnen umfassend, ob ein Betriebsparameter einer oder mehrerer aus besagter Vielzahl von Basisstationen angepasst werden kann, um besagtem Benutzergerät einen verbesserten Uplink-Service zu bieten, dabei besagte bestimmte Angabe besagter Netzwerkskapazitätsnutzung beibehaltend, wobei besagte Anpassung berechnet wird für diejenigen Benutzergeräte, für die festgestellt wurde, dass sie Anpassungskriterien zu folgenden Aspekten erfüllen: Verkehrsnachfrage, Priorität, Länge von Datenwarteschlangen oder allgemeine Verbindungsqualität.

7. Verfahren nach einem beliebigen der vorstehenden Ansprüche, wobei das Berechnen, ob besagter Betriebsparameter einer oder mehrerer aus besagter Vielzahl von Basisstationen angepasst werden kann, um besagtem Benutzergerät unter Beibehaltung besagter bestimmter Angabe besagter Netzwerkskapazitätsnutzung einen verbesserten Uplink-Service zu bieten, das Anpassen eines oder mehrerer SINR-Ziele einer oder mehrerer aus besagter Vielzahl von Basisstationen umfasst, dergestalt, dass: **SINR₁ (N₁ -1) = SINR₂ (N₂ -1),** wobei **SINR₁** und **SINR₂** Zielwerte für das Signal-zu-Rausch-und-Interferenz-Verhältnis (SINR) an einer ersten und einer zweiten aus besagter Vielzahl von Basisstationen sind, und wobei **N₁** und **N₂** für eine Anzahl aktiver Benutzergeräte in einer Funkabdeckungsregion steht, die von besagter erster und zweiter Basisstation aus besagter Vielzahl von Basisstationen unterstützt werden.

8. Verfahren nach einem jeglichen vorangehenden Ansprüche, wobei besagte Angabe besagter Netzwerkskapazitätsnutzung **L** umfasst, definiert als der Betrag des dominanten Eigenwerts einer Netzwerkmatrix **F**, wobei das Element in der **i**-ten Reihe und der **j**-ten Spalte einer **NxN**-Matrix **F** definiert ist durch **sinrᵢ h_{BS(i)j} / h_{BSs(i)i}** wenn **i≠j** und **o** wenn **i = j**, wobei die Abkürzungen stehen für:
**i** Index für die Unterscheidung von Benutzern in besagtem Netzwerk;
**BS(i)** die Benutzer **i** bedienende Basisstation;
**N** die Gesamtzahl der Benutzer in besagtem Netzwerk;
**sinrᵢ** Zielwert für das Signal-zu-Rausch-und-Interferenz-Verhältnis (SINR) für Benutzer i;
**h_{BS(i),j}** Kanalverstärkung zwischen Benutzer **j** und der Basisstation, die Benutzer **i** bedient;
**h_{BS(i),j}** Kanalverstärkung zwischen Benutzer **i** und der ihn bedienenden Basisstation.

9. Verfahren nach einem beliebigen der vorstehenden Ansprüche, wobei die Beibehaltung besagter bestimmter Angabe besagter Netzwerkskapazitätsnutzung die Begrenzung einer Abweichung zwischen einer errechneten Angabe zu besagter Netzwerkskapazitätsnutzung im Zusammenhang mit einem angepassten Betriebsparameter und einer ursprünglich berechneten Angabe zu besagter Netzwerkskapazitätsnutzung umfasst.

10. Verfahren nach einem beliebigen der vorstehenden Ansprüche, wobei besagtes Verfahren das Berechnen umfasst, ob ein Betriebsparameter einer oder mehrerer aus besagter Vielzahl von Basisstationen angepasst werden kann, um besagtem Benutzergerät unter Beibehaltung besagter bestimmter Angabe besagter Netzwerkskapazitätsnutzung einen verbesserten Uplink-Service zu bieten, wobei besagte Anpassung eine Anpassung an diejenige Basisstation aus besagter Vielzahl von Basisstationen umfasst, welche die besagtes Benutzergerät bedienende Basisstation ist, und wenn dem so ist,
Anweisen der Umsetzung besagter Anpassung besagter Betriebsparameter einer oder mehrerer aus besagter Vielzahl von Basisstationen.

11. Verfahren nach einem beliebigen der vorstehenden Ansprüche, wobei besagtes Kommunikationsnetzwerk eine Makrobasisstation umfasst, die eine Makro-Funkabdeckungsregion abdeckt, und mindestens einen Niedrigleistungs-Knoten, ausgelegt für das Unterstützen einer Region mit Kleinzellen-Funkabdeckung innerhalb besagter Makro-Funkabdeckungsregion.

12. Computerprogramm-Produkt, betreibbar für das Durchführen des Verfahrens eines beliebigen der Ansprüche 1 bis 11, wenn es auf einem Computer ausgeführt wird.

13. Netzwerkkontrollknoten, konfiguriert zur Steuerung des Betriebs eines drahtlosen Kommunikationsnetzwerks, eine Vielzahl von Basisstationen umfassend, jede von ihnen betriebsfähig für das Unterstützen einer Funkabdeckungsregion, um das Herstellen von Kommunikationsverbindungen zu Benutzergeräten (UE₁, E₂) innerhalb besagten Netzwerks zu ermöglichen, wobei besagter Netzwerkkontrollknoten umfasst:
Erfassungslogik, ausgelegt für das Sammeln von Betriebsdaten zu dem in besagtem Netzwerk operierenden Benutzergerät von besagter Vielzahl von Basisstationen, wobei besagte Betriebsdaten eine oder mehrere der folgenden Informationen umfassen: die Angabe eines Zielwerts für das Signal-zu-Rausch-und-Interferenz-Verhältnis, das von besagter, besagtes Benutzergerät bedienenden Basisstation verwendet wird; die Angabe einer Benutzergeräts-Kanalverstärkung; eine Summe von Kanalverstärkungsverhältnissen; oder die Angabe der Interferenz, die bei besagtem Benutzergerät durch andere Benutzergeräte in besagtem Netzwerk verursacht wird;
Bestimmungslogik, ausgelegt für das Bestimmen einer Angabe besagter Netzwerkskapazitätsnutzung auf der Grundlage besagter gesammelter Betriebsdaten; Berechnungslogik, ausgelegt für das Berechnen, ob ein Betriebsparameter einer oder mehrerer aus besagter Vielzahl von Basisstationen angepasst werden kann, um besagtem Benutzergerät einen besseren Uplink-Service bieten zu können, dabei besagte bestimmte Angabe besagter Netzwerkskapazitätsnutzung im Wesentlichen beibehaltend, und
Implementierungslogik, ausgelegt für das Anweisen zur Anpassung besagten Betriebsparameters einer oder mehrerer aus besagter Vielzahl von Basisstationen, wenn besagte Berechnungslogik bestimmt, dass ein Betriebsparameter einer oder mehrerer aus besagter Vielzahl von Basisstationen angepasst werden kann, um besagtem Benutzergerät einen besseren Uplink-Service bieten zu können, dabei besagte bestimmte Angabe besagter Netzwerkskapazitätsnutzung beibehaltend; wobei besagter Betriebsparameter besagter einer oder mehrerer aus besagter Vielzahl von Basisstationen die Angabe eines Zielwerts für das Signal-zu-Rausch-und-Interferenz-Verhältnis umfasst, zu verwenden durch besagte Basisstation, die besagtes Benutzergerät bedient.

## Revendications

1. Procédé de commande du fonctionnement d'un réseau de communication sans fil comprenant une pluralité de stations de base, chacune pouvant être utilisée pour prendre en charge une région de couverture radioélectrique afin de permettre l'établissement de liaisons de communication avec un équipement d'utilisateur (UE₁, UE₂) au sein dudit réseau, ledit procédé comprenant :
collecter des informations de fonctionnement en rapport avec l'équipement d'utilisateur fonctionnant dans ledit réseau auprès de ladite pluralité de stations de base, lesdites informations de fonctionnement comprenant une ou plusieurs parmi : une indication d'un rapport de signal sur bruit et interférence cible utilisé par la station de base desservant ledit équipement d'utilisateur ; une indication d'un gain de canal de l'équipement d'utilisateur ; une somme des taux de gain de canal ; ou une indication des interférences causées audit équipement d'utilisateur par d'autres équipements d'utilisateur dans ledit réseau ;
déterminer, en se basant sur lesdites informations de fonctionnement collectées, une indication de l'utilisation de la capacité dudit réseau ;
calculer si un paramètre de fonctionnement d'une ou de plusieurs parmi ladite plurality de stations de base peut être réglé afin d'offrir un service de liaison montante amélioré audit équipement d'utilisateur tout en maintenant ladite indication déterminée de l'utilisation de la capacité dudit réseau et, dans l'affirmative,
ordonner ledit réglage dudit paramètre de fonctionnement d'une ou de plusieurs parmi ladite pluralité de stations de base ;
ledit paramètre de fonctionnement de ladite une ou desdites plusieurs parmi ladite pluralité de stations de base comprenant une indication du rapport de signal sur bruit et interférence cible utilisé par ladite station de base desservant ledit équipement d'utilisateur.

2. Procédé selon la revendication 1, selon lequel le service de liaison montante amélioré comprend une qualité de service moyenne améliorée disponible pour ledit équipement d'utilisateur fonctionnant dans ledit réseau.

3. Procédé selon l'une quelconque des revendications précédentes, selon lequel ledit réglage dudit paramètre de fonctionnement comprend le réglage par un incrément sélectionné.

4. Procédé selon l'une quelconque des revendications précédentes, selon lequel lesdites informations de fonctionnement collectées à propos de l'équipement d'utilisateur fonctionnant dans ledit réseau comprennent des informations de fonctionnement actuelles.

5. Procédé selon l'une quelconque des revendications 1 à 3, selon lequel lesdites informations de fonctionnement collectées à propos de l'équipement d'utilisateur fonctionnant dans ledit réseau comprennent une indication d'informations de fonctionnement prévues.

6. Procédé selon l'une quelconque des revendications précédentes, comprenant l'étape consistant à calculer si un paramètre de fonctionnement d'une ou plusieurs de ladite pluralité de stations de base peut être réglé afin d'offrir un service de liaison montante amélioré audit équipement d'utilisateur tout en maintenant ladite indication déterminée de l'utilisation de la capacité dudit réseau, ledit réglage étant calculé pour les équipements d'utilisateur dont il a été déterminé qu'ils remplissent des critères de réglage en rapport avec un ou plusieurs parmi : demande de trafic ; priorité ; longueur de la file d'attente de données ou qualité générale de la connexion.

7. Procédé selon l'une quelconque des revendications précédentes, selon lequel le calcul si un paramètre de fonctionnement d'une ou plusieurs de ladite pluralité de stations de base peut être réglé afin d'offrir un service de liaison montante amélioré audit équipement d'utilisateur tout en maintenant ladite indication déterminée de l'utilisation de la capacité dudit réseau comprend le réglage d'un ou plusieurs objectifs de SINR d'une ou plusieurs de ladite pluralité de stations de base de telle sorte que : **SINR₁ (N₁-1)** = **SINR₂ (N₂-1),** où **SINR₁** et **SINR₂** sont les rapports de signal sur bruit et interférence (SINR) cibles au niveau d'une première et d'une deuxième de ladite pluralité de stations de base, et **N₁** et **N₂** représentent un nombre d'équipements d'utilisateur actifs dans une région de couverture radioélectrique prise en charge par lesdites première et deuxième stations de base de ladite pluralité de stations de base.

8. Procédé selon l'une quelconque des revendications précédentes, selon lequel ladite indication de l'utilisation de la capacité dudit réseau comprend **L** qui est défini comme le module de la valeur propre dominante d'une matrice d'informations de réseau **F**, l'élément dans la **i**-ème ligne et la **j**-ème colonne d'une matrice **NxN F** étant défini par **sinrᵢ h_{BS(i),j}/h_{BS(i),i}** si **i** ≠ **j**, et **o** si **i** = **j**, où
**i** désigne l'indice permettant de distinguer les utilisateurs dans ledit réseau ;
**BS(i)** désigne la station de base desservant l'utilisateur **i** ;
**N** désigne le nombre total d'utilisateurs dans ledit réseau ;
**sinrᵢ** désigne le rapport de signal sur bruit et interférence (SINR) cible de l'utilisateur **i** ;
**h_{BS(i),j}** désigne le gain de canal entre l'utilisateur **j** et la station de base qui dessert l'utilisateur **i** ;
**h_{BS(i),j}** désigne le gain de canal entre l'utilisateur **i** et la station de base qui le dessert.

9. Procédé selon l'une quelconque des revendications précédentes, selon lequel le maintien de ladite indication déterminée de l'utilisation de la capacité dudit réseau comprend la limitation d'une différence entre une indication calculée de l'utilisation de la capacité dudit réseau associée à un paramètre de fonctionnement réglé et une indication calculée originellement de l'utilisation de la capacité dudit réseau.

10. Procédé selon l'une quelconque des revendications précédentes, comprenant les étapes consistant à
calculer si un paramètre de fonctionnement d'une ou plusieurs de ladite pluralité de stations de base peut être réglé afin d'offrir un service de liaison montante amélioré audit équipement d'utilisateur tout en maintenant ladite indication déterminée de l'utilisation de la capacité dudit réseau, ledit réglage comprenant un réglage de laquelle parmi ladite pluralité de stations de base est la station de base qui dessert ledit équipement d'utilisateur et, le cas échéant,
ordonner ledit réglage dudit paramètre de fonctionnement d'une ou plusieurs de ladite pluralité de stations de base.

11. Procédé selon l'une quelconque des revendications précédentes, selon lequel ledit réseau de communication comprend une macro-station de base prenant en charge une macro-région de couverture radioélectrique et au moins un noeud de faible puissance pouvant être utilisé pour prendre en charge une région de couverture radioélectrique à petite cellule au sein de ladite macro-région de couverture radioélectrique.

12. Produit de programme informatique pouvant être utilisé, lorsqu'il est exécuté sur un ordinateur, pour mettre en oeuvre un procédé selon l'une quelconque des revendications 1 à 11.

13. Noeud de commande de réseau configuré pour commander le fonctionnement d'un réseau de communication sans fil comprenant une pluralité de stations de base, chacune pouvant être utilisée pour prendre en charge une région de couverture radioélectrique afin de permettre l'établissement de liaisons de communication avec un équipement d'utilisateur (UE₁, UE₂) au sein dudit réseau, ledit noeud de commande de réseau comprenant :
une logique de collecte pouvant être utilisée pour collecter des informations de fonctionnement en rapport avec l'équipement d'utilisateur fonctionnant dans ledit réseau auprès de ladite pluralité de stations de base, lesdites informations de fonctionnement comprenant une ou plusieurs parmi : une indication d'un rapport de signal sur bruit et interférence cible utilisé par ladite station de base desservant ledit équipement d'utilisateur; une indication d'un gain de canal de l'équipement d'utilisateur; une somme des taux de gain de canal ; ou une indication des interférences causées audit équipement d'utilisateur par d'autres équipements d'utilisateur dans ledit réseau ;
une logique de détermination pouvant être utilisée pour déterminer, en se basant sur lesdites informations de fonctionnement collectées, une indication de l'utilisation de la capacité dudit réseau ;
une logique de calcul pouvant être utilisée pour calculer si un paramètre de fonctionnement d'une ou de plusieurs parmi ladite pluralité de stations de base peut être réglé afin d'offrir un service de liaison montante amélioré audit équipement d'utilisateur tout en maintenant sensiblement ladite indication déterminée de l'utilisation de la capacité dudit réseau et,
une logique de mise en oeuvre pouvant être utilisée pour ordonner ledit réglage dudit paramètre de fonctionnement d'une ou de plusieurs parmi ladite pluralité de stations de base si ladite logique de calcul détermine qu'un paramètre de fonctionnement d'une ou de plusieurs parmi ladite pluralité de stations de base peut être réglé afin d'offrir un service de liaison montante amélioré audit équipement d'utilisateur tout en maintenant ladite indication déterminée de l'utilisation de la capacité dudit réseau ; ledit paramètre de fonctionnement de ladite une ou desdites plusieurs parmi ladite pluralité de stations de base comprenant une indication du rapport de signal sur bruit et interférence cible utilisé par ladite station de base desservant ledit équipement d'utilisateur.
